# EUROPÄISCHE PATENTSCHRIFT

(11) **EP 3 264 575 B1**
(45) Veröffentlichungstag und Bekanntmachung des Hinweises auf die Patenterteilung: **22.08.2018**
(21) Anmeldenummer: 16176655.5
(22) Anmeldetag: 28.06.2016
(51) Int. Cl.: H02K 9/22, H02K 41/02, H02K 5/20, H02K 3/24, H02K 3/47, H02K 9/19

(54) **KÜHLUNGSEINRICHTUNG FÜR DEN PRIMÄRTEIL EINES EISENLOSEN LINEARMOTORS**
COOLING APARATUS FOR THE PRIMARY OF A LINEAR MOTOR
DISPOSITF POUR RAFROIDISSEMENT DE LA PARTIE PRIMAIRE D'UN MOTEUR LINEAIRE

(43) Veröffentlichungstag der Anmeldung: 03.01.2018
(73) Patentinhaber: ETEL S.A., 2112 Môtiers (CH)
(72) Erfinder: FERNANDES GONCALVES, José Manuel, 2013 Colombier (CH); SZCZUKIEWICZ, Sylwia, 1006 Lausanne (CH)
(74) Vertreter: Pleyer, Hans Anno

(56) Entgegenhaltungen:
- EP-A1- 2 808 986
- EP-A1- 2 884 638
- EP-A2- 2 645 546
- EP-A2- 2 701 292
- US-A- 5 998 889

## Beschreibung

### GEBIET DER TECHNIK

Die vorliegende Erfindung betrifft ein Primärteil eines eisenlosen Linearmotors, bzw. einen Linearmotor mit einem solchen Primärteil. Solche Linearmotoren haben Vorteile in Anwendungen, die eine hochgenaue Positionierung erfordern, denn durch den Verzicht auf einen Eisenkern im Primärteil werden störende Rastmomente vermieden. Um auch ohne Eisenkern hohe Kräfte bewirken zu können, sind jedoch möglichst große Spulenströme nötig, die nur mit einer guten Kühlung der Spulen erreicht werden können.

### STAND DER TECHNIK

So ist es aus der US 5,998,889 bekannt, die Spulen eines eisenlosen Linearmotors zwischen zwei Kühlplatten anzuordnen, die jeweils von einem Kühlmittel durchflossen werden. Hierzu ist jede der Kühlplatten mit einem im Bereich einer Kante der Kühlplatte erstreckten Anschlussstück zum Zuführen von Kühlmittel verbunden. Die Montage und Herstellung eines solchen Primärteils ist allerdings recht aufwändig, da die Anschlussstücke an gegenüberliegenden Enden des Primärteils liegen, und somit separate Zu- und Ableitungen für Kühlmittel angeschlossen werden müssen.

Die EP 2808986 A1 offenbart eine einstückig geformte Kühlplatte für ein Primärteil eines Linearmotors, die lediglich eine Seite der Spulen des Primärteils kühlt.

### ZUSAMMENFASSUNG DER ERFINDUNG

Es ist daher Aufgabe der Erfindung, ein Primärteil für einen Linearmotor zu schaffen, das besonders einfach zu montieren ist.

Diese Aufgabe wird gelöst durch eine Primärteil gemäß Anspruch 1. Vorteilhafte Details dieser Primärteil ergeben sich auch aus den von Anspruch 1 abhängigen Ansprüchen.

Es wird ein Primärteil eines eisenlosen Linearmotors beschrieben, mit einer Mehrzahl an Spulen, die zwischen Kühlplatten angeordnet sind, wobei jede Kühlplatte mit einem im Bereich einer Kante der Kühlplatte erstreckten Anschlussstück zum Zuführen von Kühlmittel verbunden ist. Die Anschlussstücke der Kühlplatten liegen in einer Richtung senkrecht zu den Kühlplatten übereinander, so dass sich an einer Stirnseite des Primärteils ein gemeinsamer Anschlussbereich für die Kühlplatten ergibt, mit dem ein Verteilerkopf für Kühlmittel lösbar verbunden ist.

Somit kann das Primärteil über eine einzige Zuleitung und eine einzige Ableitung für ein Kühlmittel (z.B. Wasser) versorgt werden, indem diese Leitungen am einzigen Verteilerkopf angeschlossen werden. Dieser Verteilerkopf übernimmt dann die Versorgung der Kühlplatten mit Kühlmittel.

Der Verteilerkopf und die korrespondierenden Bohrungen für Befestigungsschrauben und Kühlmittelkanäle sind dabei so aufgebaut, dass der Verteilerkopf in zwei verschiedenen Orientierungen angebaut werden kann. Vorzugsweise erleichtert der Verteilerkopf die Montage auch durch eine Vertiefung, die die Anschlussstücke der Kühlplatten bzw. deren Anschlussbereich aufnimmt.

Eine Kühlplatte ist jeweils aus zwei miteinander verlöteten, Kanäle für Kühlmittel aufweisenden Platten aufgebaut. Auch die Anschlussstücke sind mit den Kühlplatten verlötet. Solche Lötverbindungen sind sehr langzeitstabil. Da sich die aus einer Kühlplatte und eine Anschlussstück gebildete Baueinheit sehr gut vorab auf Dichtigkeit prüfen lässt, ist eine spätere Leckage von Kühlmittel aus diesen Einheiten sehr unwahrscheinlich. Eine Leckage tritt eher im Bereich des Verteilerkopfes auf, der jedoch im Servicefall leicht zugänglich ist, so dass z.B. ein Auswechseln von Dichtringen zwischen den Anschlussstücken und dem Verteilerkopf einfach möglich ist.

Weitere Ausführungsbeispiele und Vorteile der Erfindung werden anhand der Figuren erklärt.

### KURZE BESCHREIBUNG DER ZEICHNUNGEN

Dabei zeigt
- Figur 1: ein Primärteil in einer Explosionsdarstellung,
- Figur 2: das Primärteil in einer Seitenansicht,
- Figur 3: zwei Kühlplatten mit zugehörigen Anschlussstücken,
- Figur 4: zwei verschiedene Ausgestaltungen für die Anschlussstücke,
- Figur 5: das Einsetzen von Abstandshaltern zwischen die Kühlplatten,
- Figur 6: verschiedene Möglichkeiten zum Anschließen des Primärteils an einen Kühlmittelkreislauf.

### BESCHREIBUNG DER AUSFÜHRUNGSFORMEN

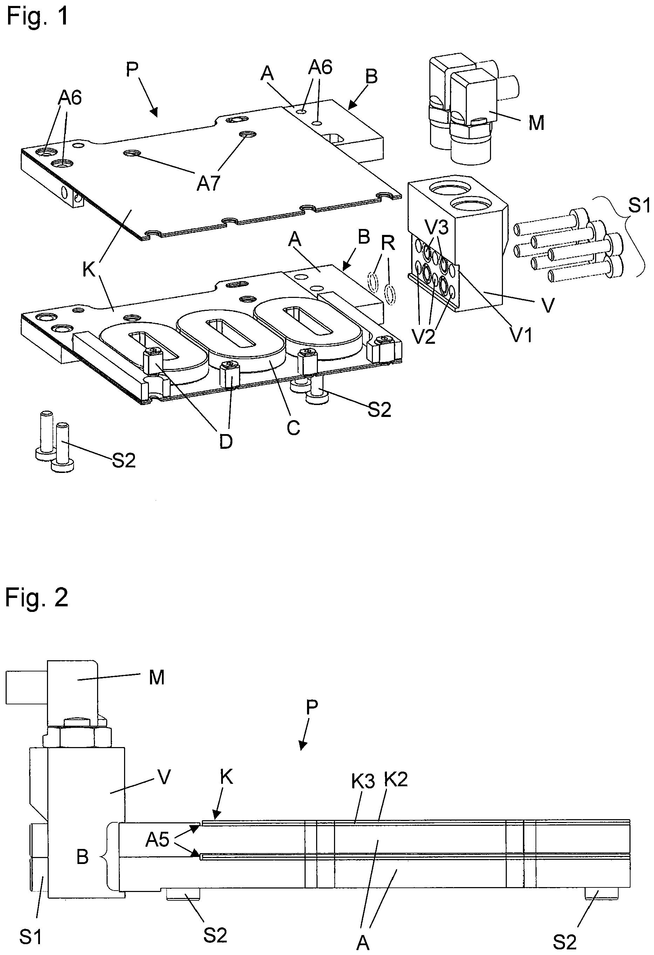

Die Figur 1 und die Figur 2 zeigen ein Primärteil P gemäß der vorliegenden Erfindung. Die Explosionsdarstellung der Figur 1 lässt den Aufbau des Primärteils P besonders gut erkennen.

Zwischen zwei Kühlplatten K aus einem nichtmagnetischen Edelstahl sind drei flächige Spulen C angeordnet, deren Spulenachse senkrecht auf den Kühlplatten K steht. Die Spulen C sind mit einer Lage eines elektrisch durchschlagfesten aber gut wärmeleitenden Materials wie Polyimid - Folie gegen die Kühlplatten K isoliert. Da Linearmotoren üblicherweise mit drei Phasen betrieben werden, finden sich drei oder ganzzahlige Vielfache von drei Spulen C im Primärteil P. Die einzelnen Kühlplatten K sind wie oben erwähnt jeweils aus zwei miteinander verlöteten, Kanäle für Kühlmittel aufweisenden Platten K2, K3 aufgebaut. Die Platten K2, K3 sind in der Seitenansicht der Figur 2 zu erkennen. In den Ausführungsbeispielen sind jeweils zwei Kühlplatten K mit einer dazwischen angeordneten Lage Spulen C gezeigt. Mehrere Lagen Spulen C und entsprechend mehr Kühlplatten K in einem Sandwich-artigen Aufbau sind ebenfalls möglich.

Anschlussstücke A, vorzugsweise ebenfalls aus einem nichtmagnetischen Edelstahl gefertigt, sind jeweils mit einer Kühlplatte K verlötet. Diese Anschlussstücke A erstrecken sich längs einer Kante der Kühlplatten K, und zwar bevorzugt entlang einer Kante, die in der Bewegungsrichtung des Primärteils P liegt. Die Anschlussstücke A verbinden die Kühlkanäle in den Kühlplatten K mit einem Anschlussbereich B, über den Kühlmittel zu- bzw. abgeführt werden kann. Die Kühlplatten K liegen bezüglich einer Richtung senkrecht zu den Kühlplatten K übereinander und sind deckungsgleich. Die in die einzelnen Platten K2, K3 geätzten oder gefrästen Kühlkanäle im Inneren der Kühlplatten K gleichen sich (sind also vorzugsweise ebenfalls deckungsgleich), und stellen eine möglichst gute Wärmeabfuhr für alle Spulen C sicher.

Die Anschlussstücke A beider Kühlplatten K liegen parallel zueinander, und zwar so, dass ein gemeinsamer Anschlussbereich B an der Stirnseite des Primärteils P entsteht. Dieser gemeinsame Anschlussbereich B weist jeweils Öffnungen für den Kühlmitteleinlass und Kühlmittelauslass für beide Kühlplatten K auf, sowie Bohrungen mit Gewinde zur Befestigung eines Verteilerkopfes V.

Dieser Verteilerkopf V verteilt das Kühlmittel gleichmäßig auf die Kühlplatten K. Er weist hierfür mehrere Kühlmittelauslässe und -einlässe V3 auf, die über Dichtringe R mit den entsprechenden Anschlüssen an den Anschlussstücken A verbunden sind, sowie Bohrungen V2, durch die Befestigungsschrauben S1 gesteckt werden, um sie mit den entsprechenden Gewindebohrungen in den Anschlussstücken A zu verschrauben. Jeder Kühlmittelanschluss V3 hat dabei je zwei Schrauben S1 seitlich angeordnet, so dass die Dichtringe R gleichmäßig mit einem Anpressdruck beaufschlagt werden können.

Der Verteilerkopf V weist außerdem eine Vertiefung V1 auf, die so ausgestaltet ist, dass sie den gemeinsamen Anschlussbereich B aufnehmen kann. Die Montage des Verteilerkopfes V ist somit erleichtert, denn die Vertiefung sorgt dafür, dass die Kühlmittelanschlüsse V3, die Dichtringe R und Bohrungen V2 des Verteilerkopfes V richtig zum Anschlussbereich B der Anschlussstücke A positioniert werden.

Der Verteilerkopf V ist bezüglich seiner Vertiefung V1, der Bohrungen V2 und der Kühlmittelöffnungen V3 außerdem so ausgestaltet, dass er in zwei verschiedenen Orientierungen angebaut werden kann. Die beiden Kühlmittelanschlüsse M können somit je nach Applikation von zwei verschiedenen Seiten zugeführt werden.

In der Figur 2 ist ein weiteres vorteilhaftes Detail der Anschlussstücke A zu erkennen. Die Dicke der Kühlplatten K (senkrecht zur Ebene der Kühlplatte) ist herstellungsbedingt nicht besonders gut definiert und unterliegt gewissen Toleranzen. Die Anschlussstücke A weisen daher eine Vertiefung A5 auf, die so tief ist, dass sie die Dicke der Kühlplatte K in jedem Fall aufnehmen kann. Eine Vertiefung A5 kann dabei entweder die halbe Dicke der Kühlplatte K aufnehmen, wenn wie in der Figur 2 eine entsprechende Vertiefung A5 eines weiteren Anschlussstücks A gegenüber liegt, oder es kann eine Vertiefung A5 die gesamte Dicke der Kühlplatte K aufnehmen. Der Abstand der beiden Kühlplatten K ist somit recht genau durch die Dicke der Anschlussstücke A bestimmt, die genaue Dicke der Kühlplatten K spielt damit auch für die äußere Abmessung des Primärteils P keine Rolle. Dies ist wichtig, da solche Primärteile P üblicherweise möglichst nahe am Sekundärteil (eine Magnetbahn mit Magneten abwechselnder Polarität) entlang geführt werden, oder auch zwischen zwei Magnetbahnen hindurch.

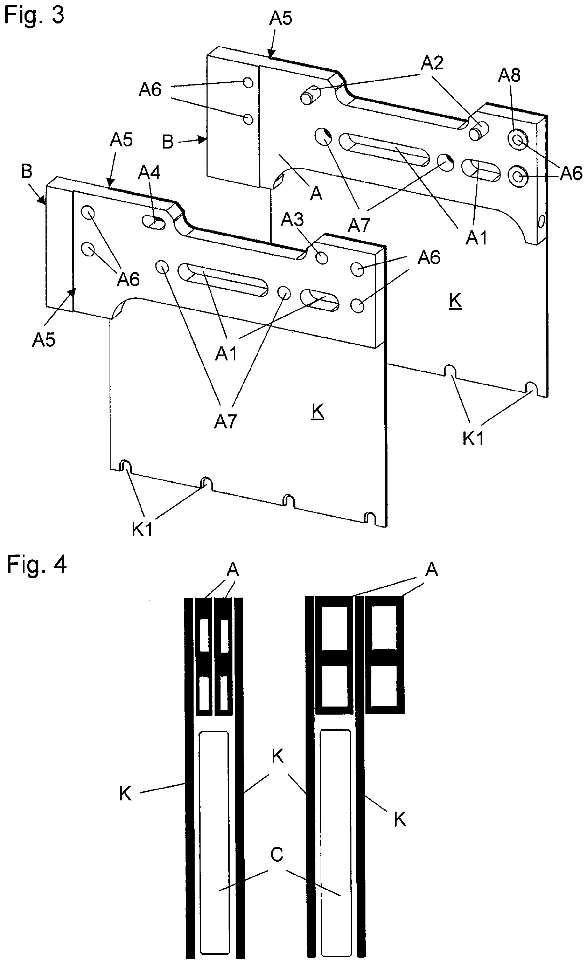

Die Figur 3 zeigt lediglich zwei Kühlplatten K und deren Anschlussstücke A vor deren Zusammenbau. Es soll im Folgenden auf einige Details dieser Bauelemente eingegangen werden.

Die beiden Anschlussstücke A der Figur 3 weisen korrespondierende Merkmale auf, die den Zusammenbau des Primärteils P erleichtern. Zunächst erkennt man, dass die Anschlussstücke A jeweils auf beiden Seiten eine Vertiefung A5 aufweisen, so dass beim Zusammenbau zwei dieser Vertiefungen A5 genügend Raum zur Aufnahme einer Kühlplatte K schaffen, auch wenn deren Dicke am oberen Rand des Toleranzbereichs liegt.

Zylindrische Vorsprünge A2 (z.B. in entsprechende Bohrungen gepresste Stifte) stehen von einer der beiden Anschlussstücke A ab und greifen in korrespondierende Ausnehmungen A3, A4 im anderen Anschlussstück A ein. Hierfür sind im dargestellten Ausführungsbeispiel eine Bohrung A3 und ein Langloch A4 vorgesehen. Alternativ könnten auch zwei Langlöcher verwendet werden, um eine gewisse Freiheit bei der Positionierung der Anschlussstücke A zum Ausgleich von Herstellungstoleranzen zu erhalten. Dies ist vor allem nützlich, um die beiden Anschlussstücke A im Bereich B zueinander auszurichten, so dass eine gemeinsame Anschlussebene entsteht. Es können so zunächst die Schrauben S1 zur Befestigung des Verteilerkopfes V angezogen werden, so dass beide Anschlussstücke A im Bereich B am Verteilerkopf anliegen, und dann die Schrauben S2, um die Anschlussstücke A miteinander zu verbinden.

Die Anschlussstücke A weisen je vier Bohrungen A6 auf, von denen jeweils eine von zwei hintereinander liegenden Bohrungen A6 ein Gewinde trägt, so dass die beiden Anschlussstücke A mittels der in Figur 1 dargestellten Schrauben S2 miteinander verschraubt werden können. Bohrungen A6, die dem Anschlussbereich B gegenüber und im Bereich der Vertiefung A5 liegen, sind von einer ringförmigen Erhebung A8 umgeben, so dass hierdurch der Abstand der Anschlussstücke A in diesem Bereich eingestellt wird und die Vertiefung A5 zur Aufnahme der Kühlplatte K erhalten bleibt. Beim Anziehen der Schrauben S2 wird die Kühlplatte K somit nicht eingeklemmt.

Zum Befestigen des Primärteils P weisen die Anschlussstücke A je zwei übereinander liegende Bohrungen A7 auf, von denen jeweils eine Bohrung ein Gewinde enthält. Somit kann das Primärteil P mittels Schrauben von einer Seite her mit einer Kundenapplikation verbunden werden, ohne von der Rückseite her Schraubenmuttern zu benötigen. Dies erleichtert den Anbau des Primärteils P in beengten Verhältnissen.

In die Anschlussstücke A sind außerdem noch Taschen A1 zur Reduzierung der Masse des Primärteils P gefräst.

An den Kühlplatten K sind an den den Anschlussstücken A gegenüber liegenden Kanten noch Öffnungen K1 zur Aufnahme von Abstandshaltern D vorgesehen. Diese Abstandshalter D und deren Montage werden unten noch näher beschrieben.

In der Figur 4 sind zwei verschiedene Ausführungsbeispiele zur Anordnung der Anschlussstücke A angegeben. Das rechte Beispiel entspricht den bisherigen Figuren: Zwischen zwei Kühlplatten K liegt das Anschlussstück A einer der beiden Kühlplatten K, das zweite Anschlussstück A liegt außerhalb der beiden Kühlplatten. Da der Bereich mit den Anschlussstücken A des Primärteils P nicht nahe an den Magneten eines Sekundärteils geführt werden muss, und üblicherweise aus diesem herausragt, stellt das kein Problem dar. Die einzelnen Kanäle für Kühlmittel können einen größeren Querschnitt und damit einen geringeren Strömungswiderstand aufweisen als bei der im Folgenden beschriebenen Variante.

Im linken Ausführungsbeispiel der Figur 4 liegen beide Anschlussstücke A zweier Kühlplatten K zwischen den beiden Kühlplatten K. Das Primärteil P ist damit im Anschlussbereich B genauso schmal wie im Bereich der Spulen C, was in manchen Applikationen ein konstruktiver Vorteil sein kann. Allerdings steht nun auch nur ein geringerer Querschnitt für die Kühlmittelkanäle zur Verfügung.

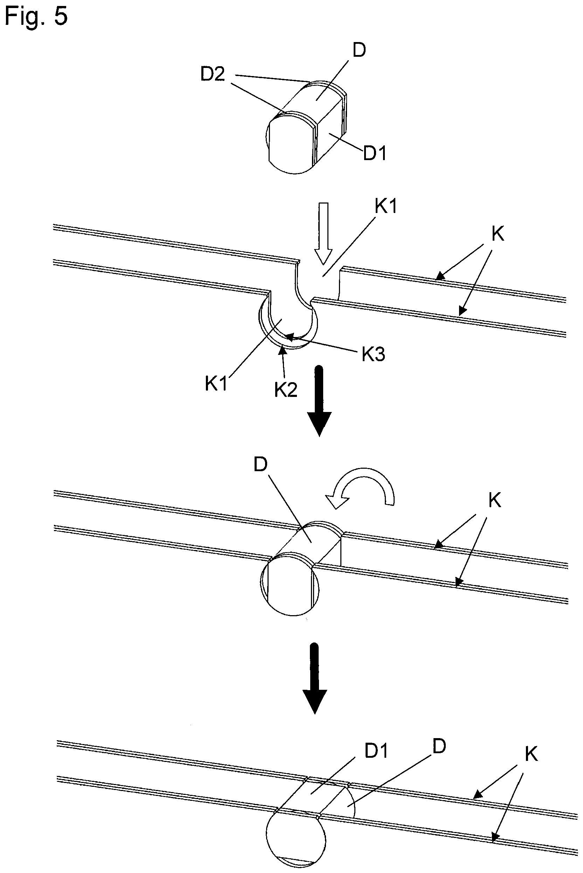

Anhand der Figur 5 wird das Einsetzen der Abstandshalter D zwischen die Kühlplatten D näher erklärt. Diese Abstandshalter D müssen den Abstand der Kühlplatten K sowohl bei Druck- als auch bei Zugbelastung erhalten. Schraubverbindungen an dieser Stelle würden seitlich aus dem Primärteil P herausragen, und können dank der speziellen Abstandshalter D vermieden werden.

Die Öffnungen K1 der Kühlplatten K sind - jedenfalls in den jeweils außen liegenden Platten K2 der Kühlplatte K - kreisförmig und schneiden die Kanten der Kühlplatte K, so dass sich die Form eines Kreissegments ergibt. Die Abstandshalter D weisen die Grundform eines Zylinders auf, dessen Radius dem Radius der kreisförmigen Öffnungen in den außen liegenden Platten K2 entspricht.

Die Abstandshalter D sind wie in der Figur 5 dargestellt an ihren Enden D2 so ausgebildet, dass sie in Öffnungen K1 eingesetzt werden können. Nach einer Drehung der Abstandshalter um 90 Grad schließt eine Abflachung D1 der Abstandshalter D bündig mit den Kanten der Kühlplatten K ab, so dass die Abstandshalter D nicht überstehen. Die Abflachung D1 entspricht dabei dem abgeschnittenen Kreissegment der Öffnung K1 in der äußeren Platte K2.

Die Öffnungen K1 und die Enden D2 der Abstandshalter D sind außerdem so gestaltet, dass nach der Rotation um 90 Grad eine formschlüssige Verbindung zwischen den Kühlplatten K und den Abstandshaltern D besteht. Die Abstandshalter D sind in dieser Position arretiert, sie können in dieser Position nicht mehr aus den Öffnungen K1 gezogen oder seitlich heraus gedrückt werden. Hierzu weisen wie gezeichnet die beiden Öffnungen K1 der beiden Platten K2, K3 einer Kühlplatte K unterschiedliche Formen auf. Die Öffnung der jeweils innen liegende Platte K3 hat nämlich eine von der Kreisform abweichende, engere U-Form, die mit Nuten an den Enden D2 der Abstandshalter D korrespondiert und nach der Rotation um 90 Grad eine formschlüssige Verbindung ergibt. Die Nuten haben dabei eine Breite, die der Dicke der inneren Platte K3 der Kühlplatte K entspricht.

Auch senkrecht zu den Kühlplatten K stehen die Abstandshalter D nicht über die Kühlplatten K hinaus, was wegen deren Nähe zu den Spulen C und damit dem Sekundärteil mit seinen Magneten vorteilhaft ist.

Nach dem Abschluss der Montage des Primärteils P wird der im Inneren liegende Freiraum um die Spulen C unter Vakuum mit einer gut wärmeleitenden Vergussmasse vergossen.

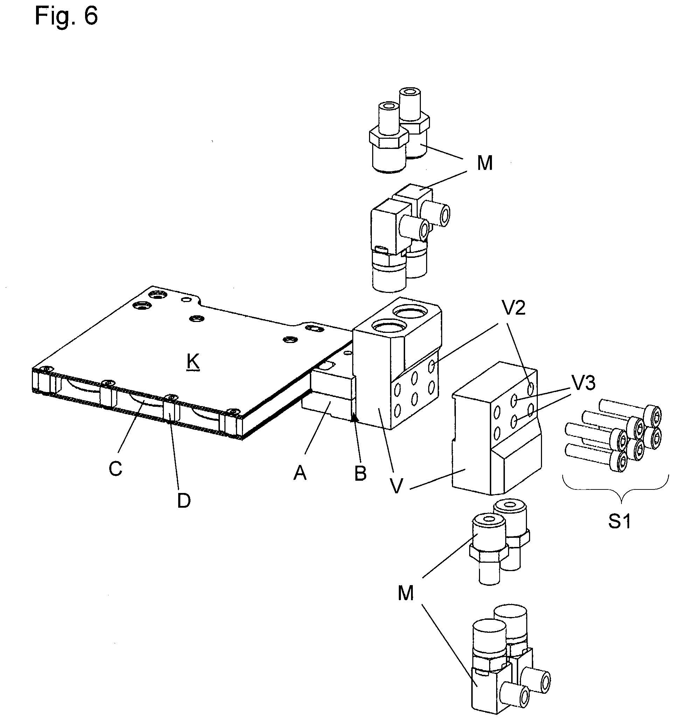

Die Figur 6 zeigt schließlich noch, dass der Verteilerkopf V in zwei um 180 Grad verdrehten Positionen an die Anschlussstücke A bzw. an den Anschlussbereich B angebaut werden kann. Zusammen mit geraden bzw. abgewinkelten Kühlmittelanschlüssen M lassen sich zahlreiche Varianten zum Anbau der Kühlung gestalten, so dass eine große Flexibilität hinsichtlich der räumlichen Gestaltung der Zuführung von Kühlmittel besteht. Der Verteilerkopf V lässt sich auch einfach demontieren, so dass im Falle einer Undichtigkeit eine Reparatur z.B. durch das Auswechseln der Dichtringe R einfach möglich ist.

## Patentansprüche

1. Primärteil eines eisenlosen Linearmotors, mit einer Mehrzahl an Spulen (C), die zwischen Kühlplatten (K) angeordnet sind, wobei jede Kühlplatte (K) mit einem im Bereich einer Kante der Kühlplatte (K) erstreckten Anschlussstück (A) zum Zuführen von Kühlmittel verbunden ist, wobei die Anschlussstücke (A) der Kühlplatten (K) in einer Richtung senkrecht zu den Kühlplatten (K) übereinander liegen, so dass sich an einer Stirnseite des Primärteils (P) ein gemeinsamer Anschlussbereich (B) für die Kühlplatten (K) ergibt, mit dem ein Verteilerkopf (V) für Kühlmittel lösbar verbunden ist, und dass der Verteilerkopf (V) eine Vertiefung (V1) aufweist, in der Bohrungen (V2) und Kühlmittelöffnungen (V3) so angeordnet sind, dass der Verteilerkopf (V) in zwei verschiedenen Orientierungen mit den Anschlussstücken (A) verbunden werden kann.

2. Primärteil nach Anspruch 1, **dadurch gekennzeichnet, dass** der Verteilerkopf (V) mittels Schrauben (S1) mit dem Anschlussbereich (B) der Anschlussstücke (A) verbunden ist.

3. Primärteil nach einem der vorhergehenden Ansprüche, **dadurch gekennzeichnet, dass** jede Kühlplatte (K) mit dem dazugehörigen Anschlussstück (A) verlötet ist.

4. Primärteil nach einem der vorhergehenden Ansprüche, **dadurch gekennzeichnet, dass** die Kühlplatten (K) jeweils aus zwei miteinander verlöteten, Kanäle für Kühlmittel aufweisenden Platten (K2, K3) aufgebaut sind.

5. Primärteil nach Anspruch 4, **dadurch gekennzeichnet, dass** die Kanäle für Kühlmittel in allen Kühlplatten (K) gleich verlaufen.

6. Primärteil nach einem der vorhergehenden Ansprüche, **dadurch gekennzeichnet, dass** der Abstand zweier Kühlplatten (K) von einer Dicke von einem der beiden Anschlussstücke (A) der Kühlplatten (K) bestimmt wird, das zwischen den beiden Kühlplatten (K) angeordnet ist, während das andere der beiden Anschlussstücke (A) außerhalb der beiden Kühlplatten (K) angeordnet ist.

7. Primärteil nach einem der Ansprüche 1 - 5, **dadurch gekennzeichnet, dass** der Abstand zweier Kühlplatten (K) von einer Dicke der beiden Anschlussstücke (A) der Kühlplatten (K) bestimmt ist, die aneinander anliegend zwischen den beiden Kühlplatten (K) angeordnet sind.

8. Primärteil nach Anspruch 6 oder 7, **dadurch gekennzeichnet, dass** die Anschlussstücke (A) eine Vertiefung (A5) aufweisen, die alleine oder zusammen mit der Vertiefung (A5) eines gegenüberliegenden Anschlussstücks (A) tief genug ist, um eine der Kühlplatten (K) aufzunehmen.

9. Primärteil nach Anspruch 6, 7 oder 8, **dadurch gekennzeichnet, dass** an einer dem Anschlussbereich (B) gegenüberliegenden Seite des Primärteils (P) Abstandshalter (D) angeordnet sind, die jeweils zwei Kühlplatten (K) auf einem der Dicke der Anschlussstücke (A) entsprechenden Abstand halten.

10. Primärteil nach Anspruch 9, **dadurch gekennzeichnet, dass** die Abstandshalter (D) zylindrisch sind.

11. Primärteil nach Anspruch 10, **dadurch gekennzeichnet, dass** die Kühlplatten (K) Öffnungen (K1) aufweisen, so dass die Abstandshalter (D) in die Öffnungen (K1) einsetzbar und durch eine Drehung um 90 Grad um die Zylinderachse arretierbar sind.

12. Primärteil nach Anspruch 11, **dadurch gekennzeichnet, dass** die Ränder der Öffnungen (K1) der Kühlplatten (K) so in Nuten an den Enden (D2) der Abstandshalter (D) eingreifen, das die Abstandshalter (D) und die Kühlplatten (K) im arretierten Zustand formschlüssig miteinander verbunden sind.

13. Primärteil nach Anspruch 12, **dadurch gekennzeichnet, dass** die jeweils außen liegende Platte (K2) der Kühlplatten (K) eine Kreissegment-förmige Öffnung aufweist, und die jeweils innen liegende Platte (K3) eine U-förmige Öffnung aufweist.

14. Primärteil nach Anspruch 11, 12 oder 13, **dadurch gekennzeichnet, dass** eine Abflachung (D1) eines Abstandshalters (D) im arretierten Zustand bündig mit Kanten der Kühlplatten (K) abschließt.

15. Linearmotor mit einem Sekundärteil mit einer Bahn aus Magneten abwechselnder Polarität und einem Primärteil nach einem der vorhergehenden Ansprüche.

## Claims

1. Primary component of an ironless linear motor, said primary component having a plurality of coils (C) that are arranged between cooling plates (K), wherein each cooling plate (K) is connected to a connecting piece (A) that extends in the region of an edge of the cooling plate (K) so as to supply cooling medium, wherein the connecting pieces (A) of the cooling plates (K) lie one above the other in a direction perpendicular to the cooling plates (K), with the result that a common connecting region (B) for the cooling plates (K) is provided on an end face of the primary component (P) and a distributor head (V) for cooling medium is connected to said common connecting region in a detachable manner, and in that the distributor head (V) comprises a depression (V1), in which holes (V2) and cooling medium openings (V3) are arranged in such a manner that the distributor head (V) may be connected in two different orientations to the connecting pieces (A).

2. Primary component according to Claim 1, **characterised in that** the distributor head (V) is connected by means of screws (S1) to the connecting region (B) of the connecting pieces (A).

3. Primary component according to any one of the preceding claims, **characterised in that** each cooling plate (K) is soldered to the associated connecting piece (A).

4. Primary component according to any one of the preceding claims, **characterised in that** the cooling plates (K) are constructed in each case from two plates (K2, K3) that are soldered to one another and comprise ducts for cooling medium.

5. Primary component according to Claim 4, **characterised in that** the ducts for cooling medium extend uniformly in all cooling plates (K).

6. Primary component according to any one of the preceding claims, **characterised in that** the spacing between two cooling plates (K) is determined by a thickness of one of the two connecting pieces (A) of the cooling plates (K), said connecting piece being arranged between the two cooling plates (K), while the other of the two connecting pieces (A) is arranged outside the two cooling plates (K).

7. Primary component according to any one of Claims 1 to 5, **characterised in that** the spacing between two cooling plates (K) is determined by a thickness of the two connecting pieces (A) of the cooling plates (K), said connecting pieces being arranged lying against one another between the two cooling plates (K).

8. Primary component according to Claim 6 or 7, **characterised in that** the connecting pieces (A) comprise a depression (A5) that alone or together with the depression (A5) of an opposite-lying connecting piece (A) is deep enough in order to receive one of the cooling plates (K).

9. Primary component according to Claim 6, 7 or 8, **characterised in that** spacers (D) are arranged on a side of the primary component (P) that lies opposite the connecting region (B), said spacers in each case keeping two cooling plates (K) at a spacing that corresponds to the thickness of the connecting pieces (A).

10. Primary component according to Claim 9, **characterised in that** the spacers (D) are cylindrical.

11. Primary component according to Claim 10, **characterised in that** the cooling plates (K) comprise openings (K1) with the result that the spacers (D) may be inserted into the openings (K1) and may be locked by means of a rotation about 90 degrees about the cylinder axis.

12. Primary component according to Claim 11, **characterised in that** the edges of the openings (K1) of the cooling plates (K) engage into grooves on the ends (D2) of the spacers (D) in such a manner that the spacers (D) and the cooling plates (K) are connected to one another in the locked state in a positive-locking manner.

13. Primary component according to Claim 12, **characterised in that** the respective outer-lying plate (K2) of the cooling plates (K) comprises a circular segment-shaped opening and the respective inner-lying plate (K3) comprises a U-shape opening.

14. Primary component according to Claim 11, 12 or 13, **characterised in that** a flattened area (D1) of a spacer (D) connects in a flush manner with edges of the cooling plates (K) in the locked state.

15. Linear motor having a secondary component having a track of magnets of alternating polarities and a primary component according to any one of the preceding claims.

## Revendications

1. Partie primaire d'un moteur linéaire sans fer, avec une pluralité de bobines (C) qui sont disposées entre des plaques de refroidissement (K), chaque plaque de refroidissement (K) étant raccordée à une pièce de raccordement (A) s'étendant dans la zone d'une arête de la plaque de refroidissement (K) et destinée à l'acheminement d'agent de refroidissement,
les pièces de raccordement (A) des plaques de refroidissement (K) étant situées les unes sur les autres dans une direction perpendiculaire aux plaques de refroidissement (K) de telle sorte que, sur un côté frontal de la partie primaire (P), il résulte une zone de raccordement (B) commune pour les plaques de refroidissement (K) à laquelle est raccordée de façon détachable une tête de distribution (V) d'agent de refroidissement, et de telle sorte que la tête de distribution (V) présente un creux (V1) dans lequel des alésages (V2) et des orifices pour agent de refroidissement (V3) sont disposés de telle sorte que la tête de distribution (V) peut être raccordée aux pièces de raccordement (A) dans deux orientations différentes.

2. Partie primaire selon la revendication 1, **caractérisée en ce que** la tête de distribution (V) est raccordée à la zone de raccordement (B) des pièces de raccordement (A) au moyen de vis (S1).

3. Partie primaire selon l'une des revendications précédentes, **caractérisée en ce que** chaque plaque de refroidissement (K) est assemblée par brasage à la pièce de raccordement (A) correspondante.

4. Partie primaire selon l'une des revendications précédentes, **caractérisée en ce que** les plaques de refroidissement (K) sont constituées respectivement de deux plaques (K2, K3) assemblées l'une à l'autre par brasage présentant des canaux pour agent de refroidissement.

5. Partie primaire selon la revendication 4, **caractérisée en ce que** les canaux pour agent de refroidissement s'étendent de la même façon dans toutes les plaques de refroidissement (K).

6. Partie primaire selon l'une des revendications précédentes, **caractérisée en ce que** l'espacement de deux plaques de refroidissement (K) est défini par une épaisseur de l'une de deux pièces de raccordement (A) des plaques de refroidissement (K) qui est disposée entre les deux plaques de refroidissement (K) tandis que l'autre des deux pièces de raccordement (A) est disposée à l'extérieur des deux plaques de refroidissement (K).

7. Partie primaire selon l'une des revendications 1 - 5, **caractérisée en ce que** l'espacement de deux plaques de refroidissement (K) est défini par une épaisseur des deux pièces de raccordement (A) des plaques de refroidissement (K) qui sont disposées de façon adjacente l'une à l'autre entre les deux plaques de refroidissement (K).

8. Partie primaire selon la revendication 6 ou 7, **caractérisée en ce que** les deux pièces de raccordement (A) présentent un creux (A5) qui, seul ou conjointement avec le creux (A5) d'une pièce de raccordement (A) opposée, est suffisamment profond pour recevoir l'une des plaques de refroidissement (K).

9. Partie primaire selon la revendication 6, 7 ou 8, **caractérisée en ce que**, sur un côté de la partie primaire (P) opposé à la zone de raccordement (B), il est disposé des pièces d'espacement (D) qui maintiennent respectivement entre deux plaques de refroidissement (K) un espacement correspondant à l'épaisseur des pièces de raccordement (A).

10. Partie primaire selon la revendication 9, **caractérisée en ce que** les pièces d'espacement (D) sont cylindriques.

11. Partie primaire selon la revendication 10, **caractérisée en ce que** les plaques de refroidissement (K) présentent des orifices (K1) de telle sorte que les pièces d'espacement (D) peuvent être introduites dans les orifices (K1) et peuvent être bloquées par une rotation de 90 degrés autour de l'axe de cylindre.

12. Partie primaire selon la revendication 11, **caractérisée en ce que** les bords des orifices (K1) des plaques de refroidissement (K) engrènent dans des rainures aux extrémités (D2) des pièces d'espacement (D) de telle sorte que, dans l'état bloqué, les pièces d'espacement (D) et les plaques de refroidissement (K) sont raccordées les unes aux autres par liaison de forme.

13. Partie primaire selon la revendication 12, **caractérisée en ce que** la plaque (K2) des plaques de refroidissement (K) située respectivement à l'extérieur présente un orifice en forme de segment de cercle, et la plaque (K3) située respectivement à l'intérieur présente un orifice en forme de U.

14. Partie primaire selon la revendication 11, 12 ou 13, **caractérisée en ce que**, dans l'état bloqué, un méplat (D1) d'une pièce d'espacement (D) se termine en affleurement avec des arêtes des plaques de refroidissement (K).

15. Moteur linéaire avec une partie secondaire avec une piste composée d'aimants de polarité alternée et avec une partie primaire selon l'une des revendications précédentes.
